# EUROPÄISCHE PATENTSCHRIFT

(11) **EP 1 113 180 B1**
(45) Veröffentlichungstag und Bekanntmachung des Hinweises auf die Patenterteilung: **14.07.2004**
(21) Anmeldenummer: 00127038.8
(22) Anmeldetag: 09.12.2000
(51) Int. Cl.: F16C 33/12, C23C 28/02

(54) **Schichtverbundwerkstoff für Gleitlager**
Laminated structure for sliding bearing
Structure stratifiée pour palier lisse

(30) Priorität: 28.12.1999 DE 19963385
(43) Veröffentlichungstag der Anmeldung: 04.07.2001
(73) Patentinhaber: Federal-Mogul Wiesbaden GmbH & Co.KG, 65201 Wiesbaden (DE)
(72) Erfinder: Huhn, Hans-Ulrich, 65388 Schlangenbad (DE); Wiebach, Dietmar, 65189 Wiesbaden (DE); Niegel, Fritz, 65375 Oestrich-Winkel (DE); Spahn, Peter, Dr., 64367 Mühltal (DE); Adam, Achim, Dr., 64569 Nauheim (DE)

(56) Entgegenhaltungen:
- EP-A- 1 048 753
- DE-A- 19 728 777
- DE-A- 19 754 221
- US-A- 5 209 578

## Beschreibung

Die Erfindung betrifft einen Schichtverbundwerkstoff für Gleitlager mit einer Trägerschicht aus einem Lagermetall, einer ersten Zwischenschicht aus Nickel und einer zweiten Zwischenschicht aus Zinn und Nickel sowie mit einer aus Kupfer und Zinn bestehenden Gleitschicht.

Schichtverbundwerkstoffe mit dem Aufbau Stahlrücken/Bleibronze/Gleitschicht aus Blei, Zinn und Kupfer haben sich durch hohe Zuverlässigkeit und mechanische Belastbarkeit bewährt. Solche Schichtverbundwerkstoffe werden beispielsweise in den Glyco-Ingenieurberichten 1/91 beschrieben.

Insbesondere die galvanische Gleitschicht ist ein multifunktionaler Werkstoff, der unter anderem folgende Aufgaben übernimmt:
- Einbettfähigkeit für Fremdpartikel
- Einlauf- bzw. Anpassung der Gleitpartner
- Korrosionsschutz für die Bleibronze
- Notlaufeigenschaften im Fall von Ölmangel.

Das Lagermetall beinhaltet ebenfalls gewisse Notlaufreserven für den Fall, daß die Gleitschicht völlig abgetragen ist. Diese seit Jahrzehnten bewährten Lagerkonzepte beinhalten aber heute noch Bleianteile, hauptsachlich in der Gleitschicht. Eine gängige Legierung besteht z.B. aus PbSn10Cu2, wobei zwischen dem Lagermetall und der Gleitschicht eine Nickel-Zwischenschicht als Diffusionssperre vorgesehen ist.

Diese bekannten Schichten weisen niedrige Härten um 12-15 HV auf, besitzen daher gute Einbettfähigkeit und sind freßunempfindlich. Sie sind jedoch aus dem gleichen Grund nur begrenzt belastbar und für die Belastungen neuer Motorentwicklungen, besonders im Bereich Dieselmotoren oft nicht mehr geeignet. Auch aufgrund der Umweltrelevanz des Schwermetalls Blei sind die Schichten unbefriedigend.

Auch kommen immer mehr harte Schichten in den hochbelasteten Lagerungen zum Einsatz, wie z.B. durch PVD-Verfahren abgeschiedene Aluminium-Zinn-Schichten mit Härten um 80 HV, die jedoch verfahrensbedingt wesentlich teurer sind. Die Lager sind sehr verschleißbeständig, besitzen kaum Einbettungsfähigkeit und werden daher meist mit weichen bleihaltigen Schichten als Gegenschale kombiniert.

Reines Zinn als Gleitfläche ist nicht geeignet, da es mit einer Härte von um 10 HV noch weicher als die konventionellen Bleilegierungen ist, und so die Belastungen, die in Haupt- und Pleuellagern entstehen, nicht aufzunehmen vermag. Daher wurden, um die Zinn-Schichten durch Erhöhung der Härte widerstandsfähiger zu machen, bereits Legierungen mit Kupfer vorgeschlagen.

Die DE 197 28 777 A1 befaßt sich mit der Herstellung eines bleifreien Lagers mit einer Gleitschicht aus SnCu, wobei der Kupfergehalt von 3-20 Gew.-% variiert wird. Mit Hilfe eines methylsulfonsauren Elektrolyten mit Kornfeinungszusätzen wird eine Schicht erzeugt, die mindestens die Eigenschaften herkömmlicher ternärer Bleibasis-Standardschichten besitzen. Um eine weitere Verbesserung der Verschleißfestigkeit zu erzeugen, sollen im Bad dispergierte Hartstoffteilchen in die Schicht eingebaut werden.

In der DE 197 54 221 A1 wird vorgeschlagen, mit Zinn und Kupfer zusätzlich Kobalt abzuscheiden, um eine weitere Erhöhung der mechanischen Belastbarkeit zu erreichen und um eine Versprödung der Bindungsschicht zwischen Gleitschicht und Nickel-Diffusionssperrdamm zu verhindern, da durch das Kobalt die Diffusionsneigung des Zinns zum Nickel vermindert wird. Dieses Zulegieren von Kobalt stellt jedoch eine Komplizierung des Abscheidungsprozesses dar, die die Prozeßsicherheit verringern kann.

Es ist daher Aufgabe dieser Erfindung, einen Schichtverbundwerkstoff mit Gleitschicht auf Zinn-Kupferbasis zu schaffen, der gleichzeitig
- eine höhere spezifische Belastbarkeit und geringeren Verschleiß als herkömmliche Schichten auf Bleibasis aufweist
- anpassungsfähig ist und Schmutzpartikel einbetten kann
- nicht die Mitabscheidung weiterer Komponenten oder Dispersoide erfordert
- und kostengünstiger herstellbar ist als die über PVD-Verfahren erzeugten Werkstoffe.

Diese Aufgabe wird mit einem Schichtverbundwerkstoff gelöst, dessen Gleitschicht eine Zinnmatrix aufweist, in die Zinn-Kupfer-Partikel eingelagert sind, die aus 39 bis 55 Gew.-% Kupfer und Rest Zinn bestehen.

Untersuchungen haben gezeigt, daß sich das Lager bei diesem Schichtaufbau nach dem Einlauf auf der zunächst noch weichen Schicht durch die Erwärmung im Betrieb selbst stabilisiert und eine dauerfeste Oberfläche ausbildet.

Bei den Partikeln handelt es sich um intermetallische Phasen, die bisher bei Gleitschichten als nachteilig angesehen wurden und deswegen vermieden wurden. Es hat sich jedoch gezeigt, daß diese Zinn-Kupfer-Partikel den Verschleiß aufgrund ihrer Härte deutlich verringern, wobei es sich überraschend herausgestellt hat, daß bei Temperaturen ab etwa 120°C eine verstärkte Zinndiffusion in die darunterliegende Zinn-Nickel-Schicht auftritt. Durch das Abwandern des Zinns aus der Gleitschicht findet eine zunehmende Aufkonzentration der Zinn-Kupfer-Partikel statt. Die sich derart verändernde Gleitfläche ist sehr belastbar und verschleißfest.

Es hat sich gezeigt, daß bei hohen Temperaturen nach sehr langen Betriebszeiten, beispielsweise nach 1000 h, der Zinnanteil sich so stark verringert hat, daß der Anteil der Zinn-Kupfer-Partikel in der Gleitschicht überwiegt.

Vorzugsweise liegt der Flächenanteil der Partikel, bezogen auf eine beliebige Schnittfläche, bei 5 bis 48 %. Dieser Anteil steigt mit zunehmender Betriebsdauer durch das Abwandern des Zinns an und kann bis zu 95 % bei einer Betriebsdauer von mehr als 1000 h betragen. Liegt der Anteil der Partikel unter 5 %, werden die Eigenschaften der Gleitschicht nur durch das Zinn bestimmt, das alleine keine ausreichende Leistungsfähigkeit aufweist. Über 48 % läßt sich die Bildung größerer Konglomerate von Partikeln nicht mehr vermeiden, die schließlich die Rolle der Matrix übernehmen, die dann aufgrund der großen Härte in der Einlaufphase keine ausreichende Einbett- und Anpassungsfähigkeit mehr besitzt.

Der Durchmesser der Partikel beträgt vorzugsweise 0,5 bis 3 µm. Zu große Partikel mit einem mittleren Durchmesser über 3 µm führen zu inhomogenen Schichteigenschaften, die die Eigenschaften eines aus dem Schichtwerkstoff hergestellten Gleitlagers besonders in der Einlaufphase beeinflussen. Zu feine Partikel mit einem mittleren Durchmesser unterhalb von 0,5 µm erhöhen die Ausgangshärte zu stark, behindern die Zinnzufuhr in die Zinn-Nickel-Schicht und damit die weitere Stabilisierung des Lagers und haben eine verringerte Korrosionsfestigkeit gegenüber dem heißen Motoröl.

Es hat sich ferner gezeigt, daß die zweite Zwischenschicht sowohl bezüglich der Schichtdicke als auch bezüglich des Zinnanteils derart eingestellt sein sollte, daß sie aus der Gleitschicht abwanderndes Zinn aufnehmen kann. Die Abwanderungsgeschwindigkeit des Zinns und somit die Einstellung der Verschleißfestigkeit und Belastbarkeit der Gleitschicht in Abhängigkeit der Zeit läßt sich über die Dicke und den Zinnanteil der zweiten Zwischenschicht einstellen.

Vorzugsweise enthält die zweite Zwischenschicht 30 bis 40 Vol. % Nickel und Rest Zinn, was in etwa einem Atomverhältnis von 1:1 entspricht. Je dicker die Zinn-Nickel-Schicht ausgebildet ist, desto mehr Zinn kann aus der Gleitschicht aufgenommen werden. Die Verschleißfestigkeit der Gleitschicht nimmt in diesem Fall relativ schnell zu.

Als bevorzugtes Verhältnis der Gleitschichtdicke zur Dicke der zweiten Zwischenschicht hat sich ein Verhältnis von 2 bis 4 herausgestellt.

Die Schichtdicke der Gleitschicht beträgt vorzugsweise 5 bis 25 µm. Die Gleitschicht kann galvanisch abgeschieden werden.

Die Schichtdicke der zweiten Zwischenschicht liegt vorzugsweise zwischen 2 und 7 µm.

Die Schichtdicke der ersten Zwischenschicht aus reinem Nickel liegt vorzugsweise bei 1 bis 4 µm. Die Nickelschicht trägt ebenfalls zum gleichgewichtsbedingten Wachstum der Zinn-Nickel-Schicht bei, indem diese nicht nur aus der darüberliegenden Gleitschicht mit Zinn, sondern auch aus der ersten Zwischenschicht mit Nickel gespeist wird. Dadurch bleibt das Verhältnis von Zinn zu Nickel von 1:1 in der Zinn-Nickel-Schicht erhalten.

Das Lagermetall kann beliebig gewählt werden. Es hat sich herausgestellt, daß die Lagermetallschicht keinen unmittelbaren Einfluß auf die Zinnabwanderung aus der Gleitschicht und somit keinen Einfluß auf die Aufkonzentration der Zinn-Kupfer-Partikel hat. Die Lagermetallschicht kann beispielsweise aus einer Kupferlegierung mit einem Kupferanteil von 50 bis 95 Gew.-% oder einer Aluminiumlegierung mit einem Aluminiumanteil von 50 bis 95 Gew.-% bestehen. Als Lagermetalle kommen Kupfer-Aluminium-, Kupfer-Zinn-, Kupfer-Zinn-Blei-, Kupfer-Zink-, Kupfer-Zink-Silizium-, Kupfer-Zink-Aluminium- oder Kupfer-Aluminium-Eisen-Legierungen in Frage.

Zur Herstellung des erfindungsgemäßen Schichtverbundwerkstoffes kann wie folgt vorgegangen werden.

Auf vorgefertigte Gleitlager, insbesondere Lagerschalen, aus dem Verbund aus Stahl und Lagermetall werden in einem ersten Schritt chemisch oder elektrochemisch die beiden Zwischenschichten aus Nickel und Zinn-Nickel aufgebracht. Danach wird die Gleitschicht galvanisch abgeschieden. Hierbei wird ein binäres alkylsulfonsaures Galvanisierbad ohne Glanzbildner und Kornverfeiner unter Zusatz von nichtionischen Netzmitteln, freier Alkylsulfonsäure und ein Fettsäureglykolester verwendet. Die grobe Abscheidung der Zinn-Kupfer-Partikel ist darauf zurückzuführen, daß kein Kornverfeinerungsmittel eingesetzt wird, wie es zur Erzielung der nach dem Stand der Technik gewünschten möglichst feinkörnigen Struktur verwendet wird.

Beispielhafte Ausführungsformen der Erfindung werden nachfolgend anhand der Zeichnungen erläutert.

Es zeigen:
- Fig. 1: einen Schnitt durch einen Schichtverbundwerkstoff,

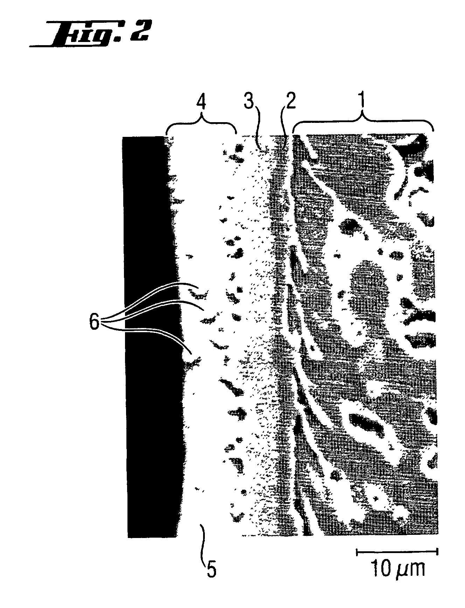

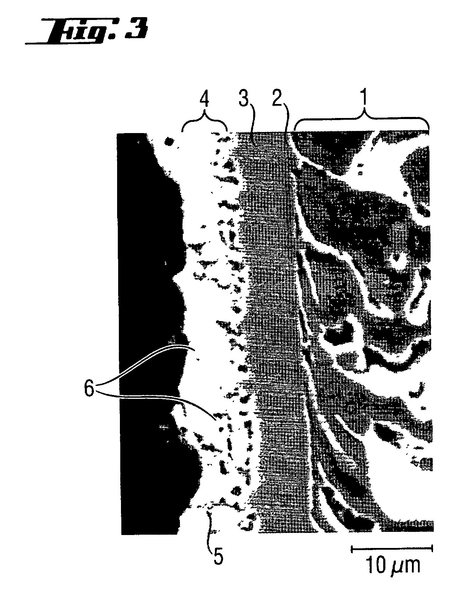

- Fign. 2 bis 4: Schnitte durch den Schichtverbundwerkstoff nach einer Wärmebehandlung nach 250 h, 750 h und 1000 h.

Ein beispielhafter Schichtverbundwerkstoff wurde wie folgt hergestellt:

Auf eine Stahlträgerschicht wurde zunächst eine Lagermetallschicht aus CuPb22Sn aufgebracht. Im nächsten Schritt wurde nach einer herkömmlichen Vorbehandlung auf die Lagermetallschicht eine erste Zwischenschicht aus Nickel aus einem Watt's Nickelelektrolyten aufgebracht.

Auf diese erste Zwischenschicht wird eine aus Nickel und Zinn bestehende zweite Zwischenschicht galvanisiert. Hierzu wird ein modifizierter Chlorid-/Fluorid-Elektrolyt verwendet.

Auf die so erzeugte Nickel-Zinn-Zwischenschicht wird dann die Gleitschicht auf Zinn-Basis galvanisiert. Für das Aufbringen der Gleitschicht kann folgendes Elektrolytsystem auf wässriger Basis eingesetzt werden:

| | |
|---|---|
| Sn²⁺ als Zinnmethansulfonat | 30 - 45 g/l |
| Cu²⁺ als Kupfermethansulfonat | 2 - 8 g/l |
| Methansulfonsäure | 80 - 140 g/l |
| Elektrolytzusatz N-HMB | 30 - 45 ml/l |
| Resorcin | 1,5 - 4 g/l |

Bei dem Elektrolytzusatz N-HMB handelt es sich um ein Netzmittel auf der Basis Alkylarylpolyglykolether der Fa. Enthone OMI.

Zur Stabilisierung des Kupferanteils können zusätzlich langkettige Polyglykolether eingesetzt werden.

Die Qualität des eingesetzten Wassers muß dem von reinem deionisiertem Wasser entsprechen. Für stabile Abscheidungsbedingungen ist es zwingend erforderlich, den Elektrolyten mindestens einmal stündlich vollständig über eine Filtrationsanlage umzuwälzen. Dadurch wird ein Teil des entstehenden Sn⁴⁺ entfernt. Eine zu hohe Anreicherung des Elektrolyten mit Sn⁴⁺ führt zu gestörtem Schichtaufbau mit Veränderungen der Phasen und ungleichmäßigem Schichtwachstum bis hin zum völligen Ausfall des Elektrolyten.

Als Anodenmaterial kommt Elektrolytreinzinn zum Einsatz.
Die Abscheidung der Gleitschicht wird in einem Temperaturbereich von 20°C bis 40°C, vorteilhaft bei 25°C bis 30°C durchgeführt.

Die Struktur dieser Gleitschicht wird nachhaltig von den verwendeten Stromstärken beeinflußt. Höhere Stromdichten führen zu gröberen Kupfer-Zinn-Partikeln. Zu niedrige Stromdichten führen zu einer unkontrollierten Verschiebung des Anteils der Kupfer-Phase. Als vorteilhaft hat sich deshalb ein Stromdichtebereich von 1,5 bis 3,0 A/dm² erwiesen.

Die Distanz Anode - Kathode sollte 350 mm nicht übersteigen, da es durch Veränderungen des inneren Elektrolytwiderstandes zu ungleichmäßigen Stromdichteverteilungen entlang der Lagersäule kommt. Das Oberflächenverhältnis Anode - Kathode muß hierbei bei ca. 1:1 (± 10 %) liegen.

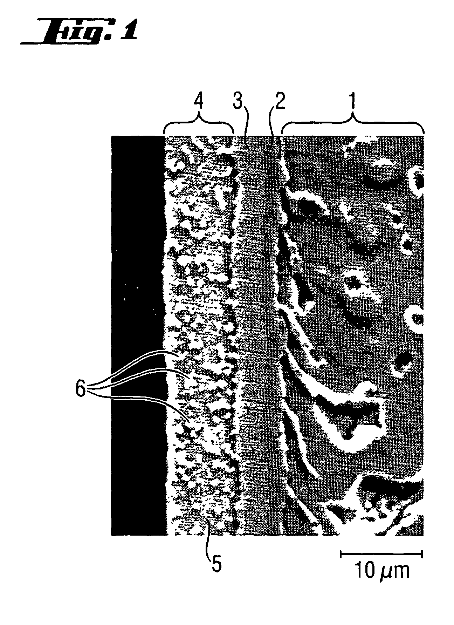

In der Fig. 1 ist ein Schnitt durch diesen Schichtverbundwerkstoff in 2500facher Vergrößerung dargestellt, der auf einer nicht dargestellten Trägerschicht eine Schicht 1 aus einem Lagermetall aus CuPb22Sn eine erste Zwischenschicht 2 aus Nickel, eine zweite Zwischenschicht 3 aus Nickel-Zinn und eine Gleitschicht 4 aufweist. Letztere besteht aus einer Zinnmatrix 5, in die Partikel 6 aus Zinn-Kupfer eingelagert sind. Diese Einlagerungen sind über die gesamte Gleitschicht 4 verteilt und teilweise zu Agglomeraten zusammengelagert.

Zur Simulation der Betriebsbedingungen eines Gleitlagers in einem Verbrennungsmotor wurde ein Ölkochtest bei 150°C an diesem Schichtverbundwerkstoff durchgeführt. Nach 250 h, 750 h und 1000 h wurden Proben entnommen und Schnitte mikroskopisch untersucht, um die Veränderungen im Schichtaufbau zu analysieren.

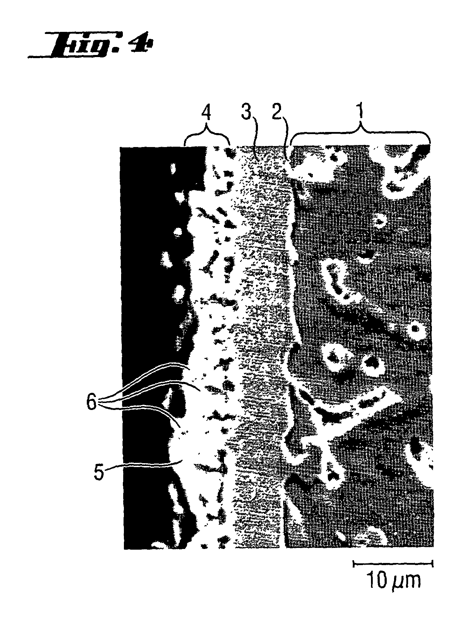

Hierbei konnte festgestellt werden, daß die Dicke der Gleitschicht 4 mit zunehmender Behandlungsdauer durch die Abwanderung des Zinns abnimmt, was mit einer Aufkonzentration der Zinn-Kupfer-Partikel 6 einhergeht. Gleichzeitig wächst auch die Dicke der Nickel-Zinn-Schicht 3 an und die Nickel-Schicht 2 nimmt ab, die in Fig. 4 nur noch als schmaler Saum zu erkennen ist. Das Anwachsen der Zinn-Nickel-Schicht 3 wird nicht nur durch das Eindiffundieren des Zinns aus der Gleitschicht 4, sondern auch durch das Eindringen von Nickel aus der darunterliegenden Nickelschicht 2 verursacht. Durch die Aufkonzentration der Zinn-Kupfer-Partikel in der Gleitschicht 4 wird der Weichphasenanteil geringer und die Härte der Schicht nimmt mit zunehmender Betriebsdauer zu.

## Patentansprüche

1. Schichtverbundwerkstoff für Gleitlager mit einer Trägerschicht (1) aus einem Lagermetall, einer ersten Zwischenschicht (2) aus Nickel, einer zweiten Zwischenschicht (3) aus Zinn und Nickel sowie mit einer aus Kupfer und Zinn bestehenden Gleitschicht (4), **dadurch gekennzeichnet,**
**daß** die Gleitschicht (4) eine Zinnmatrix (5) aufweist, in die Zinn-Kupfer-Partikel (6) eingelagert sind, die aus 39 bis 55 Gew.-% Kupfer und Rest Zinn bestehen.

2. Schichtverbundwerkstoff nach Anspruch 1, **dadurch gekennzeichnet, daß** der Flächenanteil der Partikel (6), bezogen auf eine beliebige Schnittfläche, 5 bis 48 % beträgt.

3. Schichtverbundwerkstoff nach einem der Ansprüche 1 oder 2, **dadurch gekennzeichnet, daß** der Durchmesser der Partikel (6) 0,5 bis 3 µm beträgt.

4. Schichtverbundwerkstoff nach einem der Ansprüche 1 bis 3, **dadurch gekennzeichnet, daß** die zweite Zwischenschicht (3) sowohl bezüglich der Schichtdicke als auch bezüglich des Zinnanteils derart eingestellt ist, daß sie aus der Gleitschicht (4) abwanderndes Zinn aufnimmt.

5. Schichtverbundwerkstoff nach einem der Ansprüche 1 bis 4, **dadurch gekennzeichnet, daß** die zweite Zwischenschicht (3) 30 bis 40 Vol. % Nickel enthält.

6. Schichtverbundwerkstoff nach einem der Ansprüche 1 bis 5, **dadurch gekennzeichnet, daß** das Verhältnis der Schichtdicke der Gleitschicht zur Schichtdicke der zweiten Zwischenschicht (3) 2 bis 4 beträgt.

7. Schichtverbundwerkstoff nach einem der Ansprüche 1 bis 6, **dadurch gekennzeichnet, daß** die Schichtdicke der Gleitschicht (4) 5 bis 25 µm beträgt.

8. Schichtverbundwerkstoff nach einem der Ansprüche 1 bis 7, **dadurch gekennzeichnet, daß** die Schichtdicke der zweiten Zwischenschicht (3) 2 bis 7 µm beträgt.

9. Schichtverbundwerkstoff nach einem der Ansprüche 1 bis 8, **dadurch gekennzeichnet, daß** die Schichtdicke der ersten Zwischenschicht (2) 1 bis 4 µm beträgt.

## Claims

1. Laminated compound material for sliding bearings, having a substrate layer (1) comprising a bearing metal, a first intermediate layer (2) made of nickel and a second intermediate layer (3) made of tin and nickel and having a sliding layer (4) made of copper and tin, **characterised in that** the sliding layer (4) contains a tin matrix (5) in which tin-copper particles (6) are embedded, comprising between 39% and 55% by weight of copper, the remainder being tin.

2. Laminated compound material according to Claim 1, **characterised in that** the proportional area of the particles (6) in relation to an arbitrary sectional area is between 5% and 48%.

3. Laminated compound material according to one of the claims 1 or 2, **characterised in that** the diameter of the particles (6) is between 0.5 µm and 3 µm.

4. Laminated compound material according to one of the claims 1 to 3, **characterised in that** the second intermediate layer (3) is so adjusted with regard both to the layer thickness and to the tin content that it takes up tin migrating out of the sliding layer (4).

5. Laminated compound material according to one of the claims 1 to 4, **characterised in that** the second intermediate layer (3) contains between 30% and 40% by volume of nickel.

6. Laminated compound material according to one of the claims 1 to 5, **characterised in that** the ratio of the sliding layer thickness to the thickness of the second intermediate layer (3) is between 2 and 4.

7. Laminated compound material according to one of the claims 1 to 6, **characterised in that** the thickness of the sliding layer (4) lies between 5 µm and 25 µm.

8. Laminated compound material according to one of the claims 1 to 7, **characterised in that** the thickness of the second intermediate layer (3) lies between 2 µm and 7 µm.

9. Laminated compound material according to one of the claims 1 to 8, **characterised in that** the thickness of the first intermediate layer (2) lies between 1 µm and 4 µm.

## Revendications

1. Matériau composite stratifié pour paliers lisses comportant une couche de support (1) réalisée en un métal pour palier, une première couche intermédiaire (2) réalisée en nickel, une seconde couche intermédiaire (3) en étain et en nickel, ainsi qu'une couche de glissement (4) en cuivre et en étain,
**caractérisé en ce que** la couche de glissement (4) présente une matrice d'étain (5) dans laquelle sont incorporées des particules d'étain - cuivre (6) qui sont réalisées pour 39 à 55 % en cuivre, et pour le reste en étain.

2. Matériau composite stratifié selon la revendication 1, **caractérisé en ce que** les particules (6) ont une fraction de surface, sur la base d'un plan de section quelconque, comprise entre 5 et 48 %.

3. Matériau composite stratifié selon l'une des revendications 1 ou 2, **caractérisé en ce que** le diamètre des particules (6) est compris entre 0,5 et 3 µm.

4. Matériau composite stratifié selon l'une des revendications 1 à 3, **caractérisé en ce que** la seconde couche intermédiaire (3) est ajustée, tant pour ce qui est de l'épaisseur de couche que pour ce qui est de la fraction d'étain, de façon telle qu'elle capte l'étain qui migre depuis la couche de glissement (4).

5. Matériau composite stratifié selon l'une des revendications 1 à 4, **caractérisé en ce que** la seconde couche (3) contient 30 à 40 % en volume de nickel.

6. Matériau composite stratifié selon l'une des revendications 1 à 5, **caractérisé en ce que** le rapport entre épaisseur de couche de la couche de glissement et épaisseur de couche de la seconde couche intermédiaire (3) est compris entre 2 et 4.

7. Matériau composite stratifié selon l'une des revendications 1 à 6, **caractérisé en ce que** l'épaisseur de couche de la couche de glissement (4) est comprise entre 5 et 25 µm.

8. Matériau composite stratifié selon l'une des revendications 1 à 7, **caractérisé en ce que** l'épaisseur de couche de la seconde couche intermédiaire (3) est comprise entre 2 et 7 µm.

9. Matériau composite stratifié selon l'une des revendications 1 à 8, **caractérisé en ce que** l'épaisseur de couche de la première couche intermédiaire (2) est comprise entre 1 et 4 µm.
